Europäisches Patentamt

European Patent Office

Office européen des brevets

(11) Numéro de publication: **0 298 833 B1**

(12) **FASCICULE DE BREVET EUROPEEN**

(45) Date de publication de fascicule du brevet: **27.01.93** (51) Int. Cl.⁵: **B23K 9/00**

(21) Numéro de dépôt: **88401658.5**

(22) Date de dépôt: **29.06.88**

(54) **Procédé et dispositif de soudage électrique sous eau.**

(30) Priorité: **01.07.87 FR 8709438**

(43) Date de publication de la demande:
**11.01.89 Bulletin 89/02**

(45) Mention de la délivrance du brevet:
**27.01.93 Bulletin 93/04**

(84) Etats contractants désignés:
**BE CH DE ES FR GB IT LI NL SE**

(56) Documents cités:
**FR-A- 2 133 609**    **FR-A- 2 359 676**
**GB-A- 1 491 076**    **US-A- 2 516 016**
**US-A- 2 574 514**    **US-A- 2 770 710**
**US-A- 2 814 715**    **US-A- 4 292 497**

**INTERNATIONAL INSTISTUTE OF WELDING,
Underwater welding, Trondheim, 27-28 juin
1983, Proceedings of the International
Conference on Underwater Welding, pags
341-348, Pergamon Press, Oxford, GB; H.O.
KNAGENHJELM: "Deep hyperbaric welding.
Mechanization/automation"**

**Idem**

**Idem**

(73) Titulaire: **ELECTRICITE DE FRANCE Service
National
2, rue Louis Murat
F-75008 Paris(FR)**

Titulaire: **COMPAGNIE MARITIME D'EXPERTI-
SES
36, Boulevard des Océans
F-13275 Marseille Cédex 9(FR)**

(72) Inventeur: **Rey, Henri
4, rue de la Cigogne
F-68000 Colmar(FR)**
Inventeur: **Durand, Bernard
12B, Avenue Jean Malrieu
F-13008 Marseille(FR)**
Inventeur: **Blanchard, Philippe
10, Allée des Platanes
F-91210 Draveil(FR)**

(74) Mandataire: **Fort, Jacques
CABINET PLASSERAUD 84, rue d'Amsterdam
F-75009 Paris(FR)**

Rank Xerox (UK) Business Services

## Description

La présente invention concerne un procédé et un dispositif de soudage électrique à l'arc sous eau ou dans un liquide.

Elle trouve une application particulièrement importante, bien que non exclusive, dans le domaine du soudage à l'électrode enrobée sous eau ou en "pleine eau", sur aciers au carbone, où sur aciers inoxydables.

De façon générale, le soudage électrique sous eau ou en "pleine eau" est une opération difficile, qui nécessite des précautions importantes compte tenu des risques encourus par le scaphandrier-soudeur liés d'une part à la plongée, d'autre part à la présence du circuit électrique. La mauvaise visibilité, l'état de flottaison du scaphandrier-soudeur qui conduit à des mouvements irréguliers et imprécis, le refroidissement rapide du métal fondu, et du laitier s'il y a lieu, rendent de plus difficile la maîtrise du bain de fusion par le soudeur.

On connaît déjà des procédés et dispositifs de soudage électrique sous eau. Leur domaine d'application est limité et ils ne sont plus satisfaisants dans certaines conditions comme par exemple : électrode austénitiques, parois à souder de faible épaisseur, grande profondeur de soudage, etc.. En général, ils ne permettent donc pas d'obtenir des soudures de bonne qualité. En effet, l'eau, par son potentiel d'ionisation élevé, et par la pression qu'elle exerce sur l'arc de soudage (effet de constriction de l'arc) rend difficile l'amorçage et la stabilité dudit arc de soudage ; en cas de désamorçage, en refroidissant l'électrode, l'eau ne favorise pas non plus le réamorçage de l'arc. Les arrêts et reprises fréquents des cordons de soudure par le soudeur engendrent des soudures présentant des fissures, des porosités, des soufflures et/ou des occlusions d'impuretés inacceptables.

L'article de H.O. Knagenhjelm "Deep hyperbaring welding", dans INTERNATIONAL INSTITUTE OF WELDING, Underwater welding, Trondheim, 27-28 juin 1983, Proceedings of the International conference on Underwater Welding, pages 341-348, Pergamon Press, Oxford, GB donne une vue générale des procédés de soudage en eau profonde, sous atmosphère protectrice. Il est fait mention de haute fréquence pulsée. Mais il s'agit d'une fréquence résiduelle du générateur de soudage. Il n'est fait nulle part mention dans le texte d'un générateur, distinct du générateur de soudage, capable de fournir un courant de faible intensité à haute fréquence et sous tension élevée.

La présente invention vise à fournir un procédé et un dispositif de soudage sous eau répondant mieux que ceux antérieurement connus aux exigences de la pratique, notamment en ce qu'ils facilitent l'exécution des soudures sous eau en favorisant l'amorçage et en diminuant les risques de désamorçage de l'arc, et permettent ainsi d'améliorer très nettement la qualité desdites soudures.

Le scaphandrier-soudeur, maîtrisant mieux son bain de fusion, opère plus vite, de façon moins interrompue, ce qui lui permet de courir moins de risques et pendant moins longtemps.

Dans ce but, la présente invention propose notamment un procédé de soudage électrique sous eau suivant la revendication 1.

Le document US-A-2 770 710 décrit par ailleurs un procédé de soudage électrique, destiné à être mis en oeuvre sous gaz protecteur et non pas sous eau, suivant lequel on superpose, au courant continu ou HF de soudage, un courant à haute fréquence. Rien n'y suggère d'amorcer un arc en haute fréquence avant établissement du courant de soudage, sous eau.

L'invention propose également un dispositif de soudage électrique sous eau suivant la revendication 5.

L'invention sera mieux comprise à la lecture de la description qui suit d'un mode particulier de réalisation, donné à titre d'exemple. La description se réfère aux dessins qui l'accompagnent, dans lesquels :

- la figure 1 est une vue schématique d'un dispositif selon l'invention, dont le générateur haute fréquence est situé en surface ;
- la figure 2 est une vue schématique d'un dispositif selon l'invention comportant un générateur haute fréquence immergé ;
- la figure 3 est une vue schématique d'un générateur haute fréquence immergeable selon l'invention.

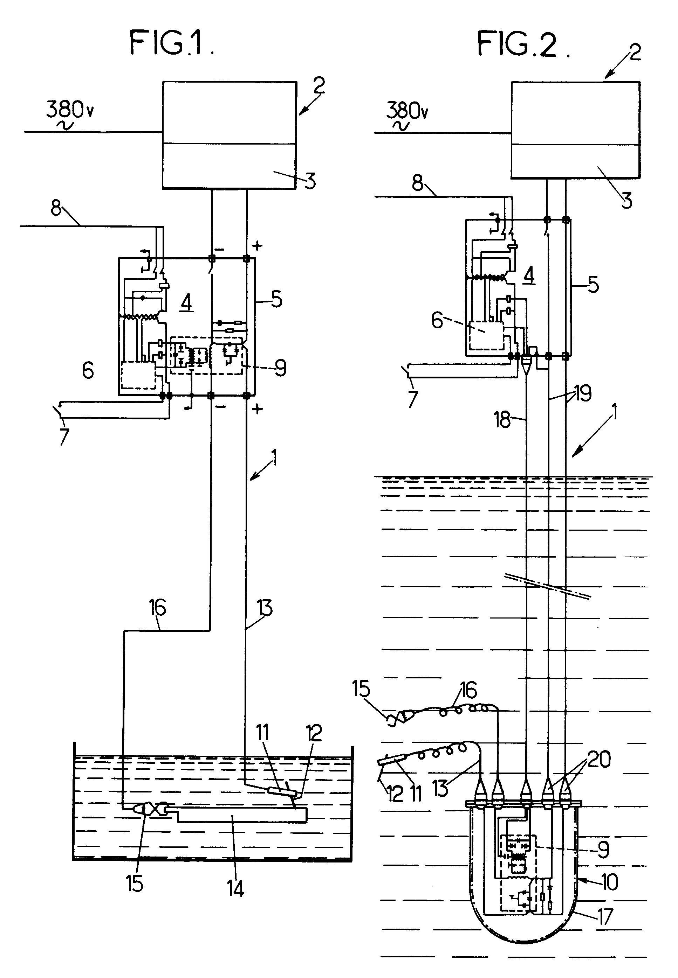

Le dispositif 1 de soudage sous eau représenté sur les figures 1 et 2, comporte un générateur de soudage 2, par exemple alimenté en courant triphasé de 380 Volts avec une fréquence de 50 Hz. Le générateur 2 de soudage en pleine eau comporte avantageusement un appareil de coupure de tension à vide 3 qui élimine d'une part les risques d'électrocution pour le scaphandrier se trouvant sur le trajet des courants de fuite, et d'autre part, le risque d'amorcer intempestivement en dehors du joint de soudure l'arc. En effet, l'arc étant coupé, le générateur de soudage délivre entre l'électrode et la pièce une tension à vide de l'ordre de 60 à 100 Volts contre laquelle il est préférable de se prémunir automatiquement.

Le générateur de soudage lui-même est connu en soi. Il est défini par ses caractéristiques statiques [U = f(I)] et ses caractéristiques dynamiques [I = f(U,t)] qui seront choisies pour répondre aux conditions déterminées et particulières du soudage en pleine eau.

Le dispositif 1 comporte un module de commande 4 (contenu dans un coffret 5 placé en surface) du cycle de soudage. Ce module connu comprend par exemple une carte programmable 6 et est muni d'une commande par gachette 7. Le module 5 est alimenté en 8 par du 220 Volts ou équivalent.

Selon l'invention, le dispositif 1 comporte un générateur HT/HF (haute tension/haute fréquence) 9 par exemple incorporé dans le coffret 5 en surface (figure 1) ou dans un coffret étanche immergé 10 (figure 2). Le cycle de soudage peut être programmé dans la carte 6 ou s'effectuer comme détaillé par la suite.

Le générateur HF a l'inconvénient de générer des parasites par conduction dans les conducteurs et par ondes électromagnétiques. Il est donc avantageux de prévoir un filtre anti-retour (non représenté) en amont du coffret (5 ou 10) du générateur HF pour protéger le générateur de soudage 2 contre la haute fréquence transmise par conduction. Le rayonnement des ondes électromagnétiques est quant à lui arrêté par des écrans généralement constitués par des plaques de tôle pour les appareils et des tresses d'acier pour les conducteurs.

Dans le cas d'un générateur HF 10 étanche et propre à être immergé (figure 2) on bénéficie de l'écran constitué par l'eau moins perméable aux ondes électromagnétiques que l'air, entre le générateur HF et le générateur de soudage 2, ce qui est un avantage non négligeable par rapport à un générateur HF non immergé.

Le dispositif 1 comprend enfin une pince ou torche 11 porte électrode 12 de soudage connectée, positivement ou négativement en fonction du type d'électrode, par un câble 13 blindé étanche, au générateur de soudage 2 via le générateur HF. La pièce à souder 14 est dans ce cas mise à la polarité inverse par l'intermédiaire d'une pince 15 prise de masse et d'un câble blindé étanche 16 connecté au générateur de soudage également via le générateur HF.

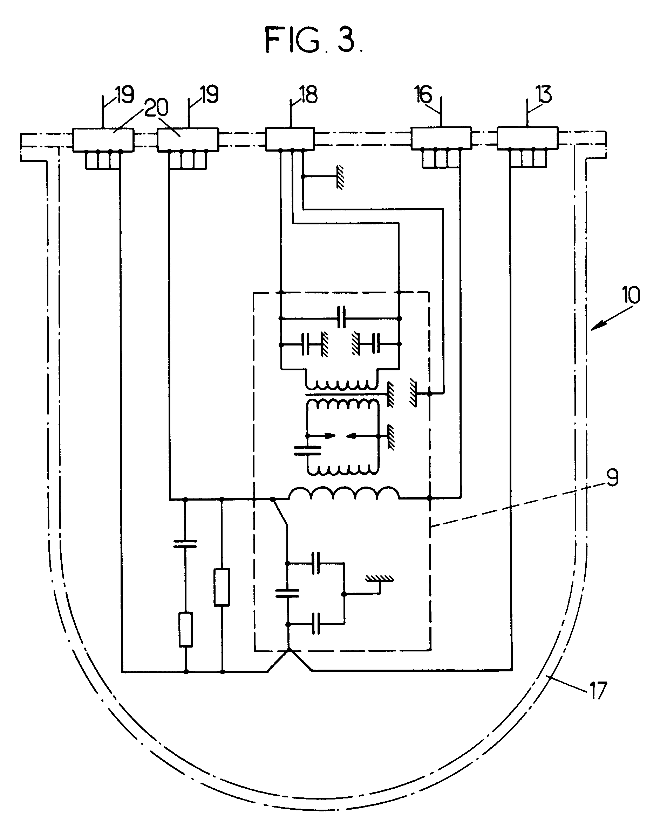

La figure 3 montre schématiquement le générateur HF immergeable selon un mode préféré de réalisation de l'invention. Ce générateur comporte une enveloppe étanche 17 externe et le circuit générateur de haute fréquence/haute tension 9 proprement dit (à l'intérieur des pointillés sur les figures) alimenté en basse tension, par exemple 24 Volts, à partir de la surface par l'intermédiaire du câble BT 18 à partir du coffret 5 d'alimentation. Le générateur haute fréquence 9 est constitué de façon connue en soi et comme montré sur les figures.

Le générateur HF immergeable est connecté au coffret 5 d'alimentation par des câbles 19 étanches et blindés par exemple amovibles grâce à des prises à enfichage étanches 20, la pince 11 et la prise de masse 15 étant reliées au coffret 10 du générateur HF par les câbles étanches, respectivement 13 et 16, de faible longueur, c'est-à-dire de quelques mètres, par exemple de longueur 5 m.

Le générateur HF immergeable permet de limiter la longueur des câbles 13 et 16, et donc de limiter l'atténuation de la puissance disponible de l'arc pilote, améliorant ainsi l'efficacité du procédé.

Le procédé de soudage sous eau de l'invention est décrit-ci-après. Il se décompose en trois phases successives : l'amorçage, le soudage proprement dit et enfin l'extinction de l'arc.

Le scaphandrier-soudeur étant en position pour commencer sa soudure pose l'extrémité de son électrode au point où il doit amorcer son arc. Il informe alors l'opérateur en surface qu'il est prêt pour amorcer. L'opérateur en surface met en marche l'alimentation du générateur HT/HF, ce qui délivre une tension haute fréquence sur les câbles d'alimentation 13, 16 de la pince porte électrodes 11 et de la prise de masse 15. Cette tension haute fréquence crée un arc pilote entre l'électrode et la pièce à souder à travers une pellicule d'eau et le cas échéant, le vernis de protection de l'électrode.

Le scaphandrier-soudeur, grâce à l'arc pilote, localise alors parfaitement le point d'amorçage sur la pièce à souder. Il confirme à l'opérateur surface qu'il est prêt à amorcer l'arc de soudage.

L'opérateur appuie sur la gâchette 7 qui ferme le contacteur de soudage et délivre la tension du générateur de soudage 2 entre l'électrode 12 et la pièce à souder 14. Le milieu étant ionisé par l'arc pilote, l'amorçage de l'arc de forte intensité est quasiment instantané. La haute tension/haute fréquence est émise de préférence sur la même polarité que l'électrode.

Pendant la deuxième phase du procédé, c'est-à-dire pendant le soudage proprement dit, la haute tension/haute fréquence est maintenue permettant ainsi d'obtenir un arc plus stable diminuant les projections de métal fondu, évitant les interruptions d'arc, permettant de diminuer l'intensité de soudage qui autorise ainsi le montage sur tôle mince sans effondrement. Par ailleurs, ces facteurs favorisent la fusion régulière de l'enrobage de l'électrode qui, en formant une gaine autour de l'arc, diminue l'éblouissement du soudeur et favorise donc un meilleur guidage de l'électrode dans le chanfrein.

L'ensemble de ces facteurs permettent d'améliorer considérablement la qualité des soudures par rapport aux procédés conventionnels.

De façon avantageuse, on utilise une haute tension qu'on associe à une très faible intensité de l'ordre du milliampère. La tension haute fréquence appliquée dans l'invention est de fréquence comprise entre 100 KHz et 10 MHz. Sa valeur efficace est avantageusement comprise entre 1000 et 10.000 Volts, le courant généré pouvant être alternatif ou pulsé.

Lors des essais qui ont permis de montrer les avantages importants de stabilisation qu'on vient d'évoquer, de bons résultats ont été obtenus de façon surprenante avec une tension de génération du courant de soudage unidirectionnel et en particulier pulsé. De tels courants de soudage sont donc avantageusement utilisés dans l'invention.

Enfin la dernière phase est l'extinction de l'arc, qui peut se faire de deux façons :

- le soudeur écarte brutalement l'électrode de la pièce à souder et l'arc s'éteint de lui-même. L'opérateur surface coupe alors la tension à vide du générateur en relâchant la gâchette 7, puis l'alimentation de la haute fréquence sur le coffret 5.
- le soudeur demande à l'opérateur surface de couper le courant de soudage. L'opérateur surface relâche la gâchette 7 et le contacteur de soudage s'ouvre coupant l'arc et la tension à vide. L'alimentation du générateur haute tension est ensuite coupée par l'opérateur surface.

## Revendications

1. Procédé de soudage électrique sous eau, suivant lequel :

   - on pose l'extrémité d'une électrode de soudage (12), placée sous eau, au point où doit être amorcé l'arc sur la pièce à souder (14),
   - on applique une tension à haute fréquence entre l'électrode (12) et la pièce (14) pour créer un arc pilote entre l'électrode et la pièce à souder, à travers une pellicule d'eau, et ioniser l'eau par un courant haute fréquence à très faible intensité une fois l'arc pilote établi,
   - on fournit à l'électrode (12) une tension de création et de maintien d'un arc de soudage à partir d'un générateur de soudage (2) pour établir un arc de forte intensité, et
   - on maintient la tension à haute fréquence superposée en permanence à la tension de création et de maintien d'un arc de soudage, pendant toute la durée du soudage sous eau.

2. Procédé selon la revendication 1, caractérisé en ce que la haute fréquence est comprise entre 100 kHz et 10 MHz, la tension haute fréquence a une valeur efficace comprise entre 1 000 V et 10 000 V et le courant HF est de l'ordre du mA.

3. Procédé selon la revendication 1 ou 2, caractérisé en ce que la tension de génération du courant de soudage est unidirectionnelle.

4. Procédé selon la revendication 3, caractérisé en ce que la tension de génération du courant de soudage est pulsée.

5. Dispositif de soudage électrique sous eau, comprenant un porte-électrode (11) ; un générateur de soudage (2) constitué pour être placé en surface, de puissance suffisante pour fournir un courant de soudage de forte intensité ; un générateur HT/HF (10) permettant de fournir un courant de l'ordre du milli-ampère à une fréquence comprise entre 100 kHz et 10 MHz sous une tension dont la valeur est comprise entre 1 000 et 10 000 V, contenu dans une enveloppe étanche ; un module (4) de commande en surface, muni d'un câble basse tension étanche (18) d'alimentation du générateur HT/HF et d'un câble (19) étanche d'amenée de courant de soudage depuis le générateur de soudage (2) vers le générateur HT/HF, ledit module (4) permettant de mettre en marche l'alimentation du générateur HT/HF (10) indépendamment de la fourniture de courant par le générateur de soudage ; et un câble étanche (13) de longueur inférieure à 5 mètres reliant le générateur HT/HF au porte-électrode (11) et amenant le courant à fréquence comprise entre 100 KHz et 10 MHz et le courant de soudage.

6. Dispositif selon la revendication 5, caractérisé en ce qu'il comporte de plus des moyens (3) de coupure de l'alimentation de l'électrode (12) en courant de soudage en cas de désamorçage de l'arc, de sorte que la tension à vide entre l'électrode (12) et la pièce (14) soit rendu nulle.

7. Dispositif selon la revendication 5 ou 6, caractérisé en ce que le générateur de soudage (2) est relié à l'enveloppe étanche (17) du générateur HT/HF par l'intermédiaire d'un boîtier de commande (5) émergé qui alimente également le générateur HT/HF (10) par l'intermédiaire d'un câble basse tension (18).

## Claims

1. Method of underwater electric welding, comprising the steps of :

   - placing the end of a welding electrode (12), immersed in water, at a point where an arc should be striken on the part to be welded (14),
   - applying a high frequency voltage between the electrode (12) and the part (14) for starting a striking arc between the electrode and the part to be welded, through a film of water, and for ionizing water by a high frequency current having a very low intensity after the striking arc has been initiated,

- delivering a voltage for generating and maintaining a welding arc to the electrode (12) from a welding generator (2) for producing a high intensity arc, and

- maintaining the high frequency voltage superimposed continuously to the voltage for generating and maintaining a welding arc, during the whole duration of the underwater welding.

2. Method according to claim 1, characterized in that the high frequency is comprised between 100 kHz and 10 MHz, the high frequency voltage has a rms value comprised between 1 000 Volts and 10 000 Volts and the high frequency current is of the order of 1 milliampere.

3. Method according to claim 1 or 2, characterized in that the voltage for generating the welding current is unidirectional.

4. Method according to claim 3, characterized in that the voltage for generating the welding current is pulsed.

5. Underwater electric welding device, comprising an electrode holder (11) ; a welding generator (2) constructed to be located above the surface, having a power sufficient for delivering a welding current of high intensity ; a high voltage high frequency generator (10) capable to deliver a current of about 1 milliampere at a frequency comprised between 100 kHz and 10 MHz under a voltage whose value is comprised between 1 000 and 10 000 Volts, contained in a fluid-tight envelope ; a module (4) for control from the surface, provided with a fluid-tight low voltage cable (18) for feeding the high voltage high frequency generator and with a fluid-tight cable (19) for delivering the welding current from the welding generator (2) to the high voltage high frequency generator, said module (4) enabling to initiate the supply of the high voltage high frequency generator (10) independently from the delivery of current by the welding generator ; and a fluid-tight cable (13) having a length lower than 5 meters connecting the high voltage high frequency generator to the electrode holder (11) and delivering the current having a frequency comprised between 5 kHz and 10 MHz and the welding current.

6. Device according to claim 5, characterized in that it further comprises means (3) for cutting off the welding current delivered to the electrode (12) responsive to collapse of the arc, for the voltage without load between the electrode (12) and the part (14) to become zero.

7. Device according to claim 5 or 6 characterized in that the welding generator (2) is connected to the fluid-tight envelope (17) of the high voltage high frequency generator through a control unit (5) which is out of water and which further feeds the high voltage high frequency generator (10) via a low voltage cable (18).

**Patentansprüche**

1. Verfahren zum elektrischen Unterwasserschweißen, umfassend:
   - Setzen des Endes einer Schweißelektrode (12), die sich unter Wasser befindet, auf die Stelle, wo auf dem zu schweißenden Teil (14) der Lichtbogen gezündet werden muß,
   - Anlegen einer Hochfrequenzspannung zwischen der Elektrode (12) und dem Teil (14), um einen Führungslichtbogen zwischen der Elektrode und dem zu schweißenden Teil quer zu einem Wasserfilm zu erzeugen, und um das Wasser durch einen Hochfrequenzstrom mit sehr geringer Stromstärke zu ionisieren, wenn der Führungslichtbogen einmal ausgebildet ist,
   - Versorgen der Elektrode (12) mit einer Spannung zum Erzeugen und zum Halten eines Schweißlichtbogens aus einem Schweißgenerator (2) zum Ausbilden eines Lichtbogens starker Intensität, und
   - Aufrechterhalten der Überlagerung der Hochfrequenzspannung kontinuierlich über die Spannung zum Erzeugen und Halten eines Schweißlichtbogens während der gesamten Schweißdauer unter Wasser.

2. Verfahren nach Anspruch 1, **dadurch gekennzeichnet,** daß die Hochfrequenz zwischen 100 kHz und 10 MHz liegt, die Hochfrequenzspannung einen Effektivwert zwischen 1000 V und 10 000 V hat, und der Hochfrequenzstrom von der Größenordnung von mA ist.

3. Verfahren nach Anspruch 1 oder 2, **dadurch gekennzeichnet,**

daß die Spannung zum Erzeugen des Schweißstromes in eine Richtung gerichtet ist.

4. Verfahren nach Anspruch 3,
**dadurch gekennzeichnet,**
daß die Spannung zum Erzeugen des Schweißstromes gepulst ist.

5. Vorrichtung zum elektrischen Unterwasserschweißen, umfassend einen Elektrodenhalter (11);
einen Schweißgenerator (2), der zum Anordnen über Wasser ausgebildet ist und von ausreichender Leistung zum Liefern eines Schweißstromes von hoher Intensität ist;
ein Hochspannungs/Hochfrequenz(HT/HF)-Generator (10), der einen Strom in der Größenordnung von mA mit einer Frequenz zwischen 100 kHz und 10 MHz mit einer Spannung, deren Wert zwischen 1000 und 10 000 V ist, liefern kann, und der in einem abgedichteten Gehäuse enthalten ist;
ein Steuermodul (4) über Wasser, das mit einem abgedichteten Niederspannungskabel (18) zum Versorgen des HT/HF-Generators und mit einem abgedichteten Kabel (19) versehen ist, zum Zuführen des Schweißstromes von dem Schweißgenerator (2) an den HT/HF-Generator, wobei das Modul (4) die Versorgung des HT/HF-Generators (10) unabhängig von der Zulieferung des Stromes durch den Schweißgenerator in Betrieb setzen kann; und
ein abgedichtetes Kabel (13) mit einer kleineren Länge als 5 m, das den HT/HF-Generator mit dem Elektrodenhalter (11) verbindet und den Strom mit einer Frequenz zwischen 100 kHz und 10 MHz und den Schweißstrom einspeist.

6. Vorrichtung nach Anspruch 5,
**dadurch gekennzeichnet,**
daß sie außerdem eine Einrichtung (3) umfaßt zum Unterbrechen der Versorgung der Elektrode (12) mit Strom zum Schweißen im Falle des Zusammenbruchs des Lichtbogens, in der Art und Weise, daß die Ausschaltspannung zwischen der Elektrode (12) und dem Teil (14) null ergeben soll.

7. Vorrichtung nach Anspruch 5, 6 oder 7,
**dadurch gekennzeichnet,**
daß der Schweißgenerator (2) mit dem abgedichteten Gehäuse (17) des HT/HF-Generators unter Zwischenschaltung eines über Wasser angeordneten Steuergehäuses (5) verbunden ist, das gleichermaßen den HT/HF-Generator (10) mittels eines Niederspannungskabels (18) versorgt.

FIG.1.

FIG.2.

# FIG. 3.